# EUROPEAN PATENT APPLICATION

(11) **EP 4 219 028 A1**
(43) Date of publication of application: **02.08.2023**
(21) Application number: 22196304.4
(22) Date of filing: 19.09.2022
(51) Int. Cl.: B07B 1/55, B07B 1/54, B02C 17/18

(54) **SCREENING DEVICE, SCREENING SYSTEM AND SCREENING METHOD**

(30) Priority: 28.01.2022 FI 20225074
(71) Applicant: EcoUp Oyj, 90100 Oulu (FI)
(72) Inventor: Hirvensalo, Ilari, Mäntsälä (FI); Lazarev, Juri, Turku (FI)
(74) Representative: Wilenius, Jami Juhani

(57) **Abstract**

A screening device (100) is disclosed. The screening device comprises a screen cloth (115) for separating a screened fraction, a perforated support structure (110, 111) for supporting the screen cloth (115), an outlet (120) for the screened fraction and an inlet (122) for cleaning air. The screening device further comprises a vibrating device (176) for vibrating the perforated support structure and the screen cloth, and a declogging nozzle (136, 137) for blowing cleaning air against the screen cloth (115). The perforated support structure (110, 111) and the screen cloth are rotatable in relation to the declogging nozzle (136, 137). Also, a screening system and a screening method are disclosed.

## Description

### FIELD OF THE INVENTION

The invention relates to screening devices and systems, as well as to a method for screening dry source material.

### PRIOR ART

In many fields dry source material is ground into smaller particles using a ball mill. Screening of the ground source material is typically done using a separator which separates fine particles and coarse particles. The coarse particles are then transported back to the ball mill for further grinding. This consumes a lot of energy when the same material has to pass through the ball mill and the separator multiple times.

In laboratory environment a small batch of material can be ground until there are no coarse particles left. In industrial scale and in continuous processes dust accumulation becomes a problem and prevents further grinding of the dry source material.

US3511374 discloses a pressure screen for removing oversize particles from a fluid. The device needs to be flushed empty for cleaning the screen with a high-speed jet.

CN215390605U discloses a screening device for compound fertilizer production. The device comprises a knocking mechanism, a high-pressure air pipe and a brush for cleaning a screen of the device.

### BRIEF DESCRIPTION OF THE INVENTION

The object of the invention is a device, a system and a method which alleviate the drawbacks of the prior art.

Object of the invention is achieved with a screening device having a screen cloth supported by a support structure. A declogging nozzle is arranged inside the support structure for declogging the screen cloth. The screening device also comprises a vibrating device in contact with the support structure for vibrating the screen cloth. This arrangement allows for efficient continuous screening of dry source material without transporting different-sized fractions to separate processing devices.

### BRIEF DESCRIPTION OF THE FIGURES

The invention is now described in more detail in connection with preferred embodiments, with reference to the accompanying drawings, in which:
Fig. 1 illustrates a screening device according to an embodiment;
Fig. 2 illustrates a screening system according to an embodiment;
Fig. 3 shows a cross-section of a screening device according to an embodiment;
Fig. 4 shows a cross-section of a detail of a declogging nozzle according to an embodiment; and
Fig. 5 illustrates internal parts of a screening device according to an embodiment without a perforated support structure.

### DETAILED DESCRIPTION OF THE INVENTION

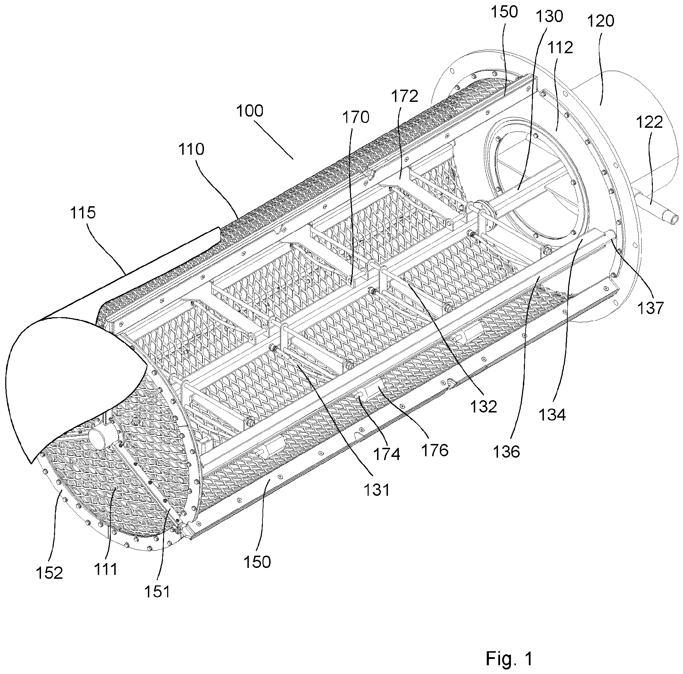

Figure 1 shows a screening device 100 according to an embodiment of the present disclosure. The screening device comprises a screen cloth 115 for separating a screened fraction from source material. The screen cloth is preferably the outermost part of the screening device and designed to be easily removable from the screening device so that the screen cloth can be replaced with a different one if source material changes or if a screened fraction of a different size distribution is desired. In an embodiment, the screen cloth 115 has a shape of a hollow right circular cylinder having a closed end and an open end. A screen cloth of this shape can be easily slid onto the screening device and it has a largely surface area for screening the source material.

Size of openings in the screen cloth, i.e. a pore size defines size of particles of the screened fraction that passes through the screen cloth. Preferably, the screen cloth 115 has a pore size of at least 30 micrometers and at most 1000 micrometers. More preferably, the screen cloth 115 has a pore size of at least 100 micrometers and at most 300 micrometers.

The screening device 100 further comprises a perforated support structure 110, 111 for supporting the screen cloth 115. The perforated support structure keeps the screen cloth 115 in a tubular shape and prevents it from collapsing when suction is applied. The support structure is preferably a metal wire mesh, metal lath or an expanded perforated metal sheet. Preferably the metal used in the support structure is stainless steel. The screen cloth 115 is outside the perforated support structure 110, 111.

In an embodiment of the present disclosure the support structure comprises a tubular section 110 and a planar section 111 where the planar section 111 closes one end of the tubular section 110. This type of embodiment is shown in Figure 1 and the tubular section 110 consists of three identical parts attached to three longitudinal support beams 150 extending in the longitudinal direction of the tubular shape. On one end of the tubular section 110 may be an annular support 152 to which the three parts of the tubular section of the support structure may be attached. The three longitudinal support beams 150 may also be attached to the annular support 152 for example by bolts and nuts or by welding. The planar section 111 consists of three identical parts attached to three radial support beams 151 extending in radial direction of the tubular shape. The three radial support beams 151 may be attached to the annular support 152 for example by bolts and nuts or by welding. Alternatively, the planar section 111 consists of a single perforated support structure that is welded to the radial support beams 151 and/or the annular support 152. In an embodiment, the planar section 111 may also be closed and thereby not having any screening function. The other end of the tubular section 110, opposite to the planar section 111 and the annular support 152, comprises an end plate 112 which has a different structure than the support structure. The three longitudinal support beams 150 may also be attached to the end plate 112 for example by bolts and nuts or by welding. The three longitudinal support beams preferably extend between the annular support 152 and the end plate 112. Preferably, the end plate is a steel plate having apertures for input and output.

In an embodiment where the tubular section 110 consists of three parts and the three longitudinal support beams 150, the screen cloth 115 of the tubular part preferably consists of three parts, each part being attached to two of the three support beams and stretched between the two support beams.

The screening device 100 comprises an outlet 120 for the screened fraction to exit the screening device by suction applied to the outlet 120. The outlet is preferably located on the end plate 112. The screening device 100 also comprises an inlet 122 for introducing cleaning air in to the screening device. The cleaning air can be compressed air or an air flow from e.g. a blower. The inlet is preferably located on the end plate 112 and in an embodiment the inlet 122 is arranged within the outlet 120 as shown in Figures 1, 3 and 5. The outlet 120 preferably comprises a tubular extension into which a pipe or a hose can be attached for applying suction and for removing the screened fraction from inside the screening device. Within said tubular extension of the outlet, a smaller tubular extension can be provided to form an inlet 122. The smaller tubular extension of the inlet 122 is in a fluid connection with a main air pipe 130 which preferably runs in the middle of the outlet 120 and extends the whole length, or substantially the whole length, of the screening device. The main air pipe 130 acts preferably also as a rotation shaft about which the support structure 110, 111 and the screen cloth 115 are configured to rotate.

As suction is applied via the outlet 120, the source material outside the screening device 100 will be drawn against the screen cloth 115. Particles small enough to pass through the pores of the screen cloth 115 will end up inside the screening device while larger particles accumulate against the screen cloth 115. The accumulation severely reduces screening capability of the screen cloth by clogging the screen cloth. The screening device further comprises a declogging nozzle 136, 137 for blowing out the accumulated larger particles thereby restoring the screening capability. The declogging nozzle(s) are located inside the perforated support structure, whereas the screen cloth is located outside the perforated support structure. Cleaning air introduced via the inlet 122 flows into the main air pipe 130 and from there to the declogging nozzle through one or more air tubes 131. The main air pipe 130 and the one or more air tubes 131 form an air conduit extending between said inlet 122 and said declogging nozzle 136, 137. The declogging nozzle is configured to direct a flow of cleaning air from the inlet 122 against the screen cloth 115 for declogging the screen cloth.

In an embodiment of the present disclosure the screening device comprises at least one declogging nozzle 136, 137 configured to direct a flow of cleaning air from the inlet 122 against the screen cloth through the tubular section 110 of the perforated support structure and at least one declogging nozzle configured to direct a flow of cleaning air from the inlet 122 against the screen cloth through the planar section 111 of the perforated support structure.

In an embodiment the declogging nozzle comprises a tube 136 having one or more apertures 137 facing the perforated support structure 110, 111. The cleaning air is blown through the perforations of the support structure and through pores of the screen cloth 115 thereby clearing the pores from larger particles.

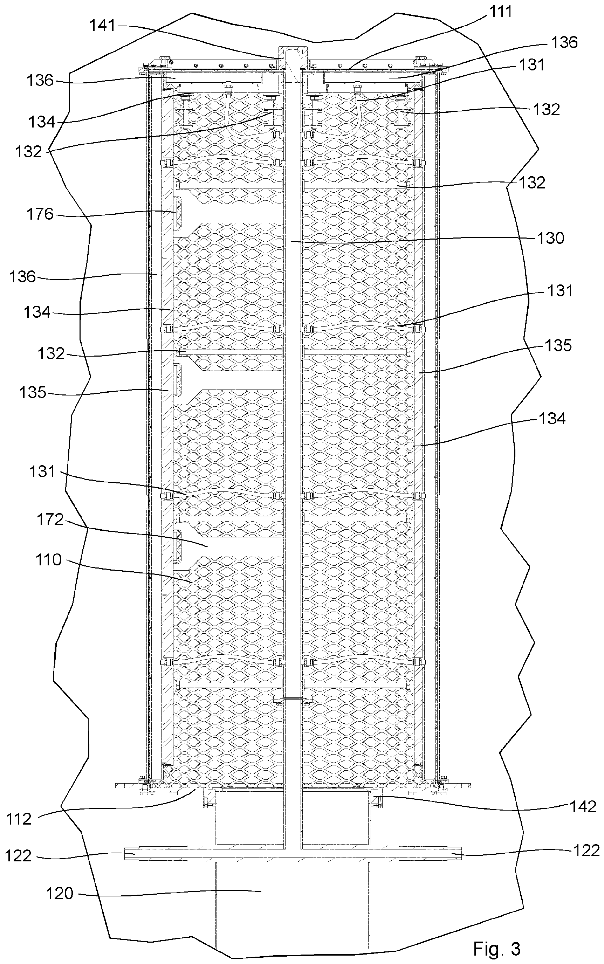

In an embodiment the declogging nozzle comprises a tube 136 having a slot 137 extending substantially the whole length of the tube 136. One or more air tubes 131 connect the main air pipe 130 to the tube 136. The slot 137 can have a width of at least 0,1 mm and at most 1,0 mm. The width of the slot 137 is most preferably about 0,2 mm. The slot 137 extends through the wall of the tube 136. Instead of a long slot, also multiple shorter slots can be used but also circular apertures next to each other forming a line. Preferably there are two declogging nozzles for the tubular section 110 of the support structure and two declogging nozzles for the planar section 111 of the support structure, as shown for example in Figure 3. One or more declogging nozzles can be supported by rods 132 extending between the main air pipe 130 and the declogging nozzle(s).

The screening device 100 further comprises one or more vibrating devices 176 for facilitating declogging of the screen cloth. The vibrating devices are preferably located inside the perforated support structure and at least partially in physical contact with the perforated support structure for effecting or conveying vibrations into the perforated support structure. Vibration of the perforated support structure is conveyed to the screen cloth 115 as the screen cloth lies against the perforated support structure.

Said one or more vibrating devices can be active or passive vibrating devices. A passive vibrating device means a device which is not externally powered by electric, pneumatic or hydraulic connection. Active vibration devices could be implemented by electric vibrating devices or pneumatic devices that could be driven with e.g. the flow of the cleaning air. Said one or more vibrating devices are preferably passive vibrating devices which are configured to cause vibrations in the perforated support structure 110, 111 and the screen cloth 115 when the perforated support structure is rotated.

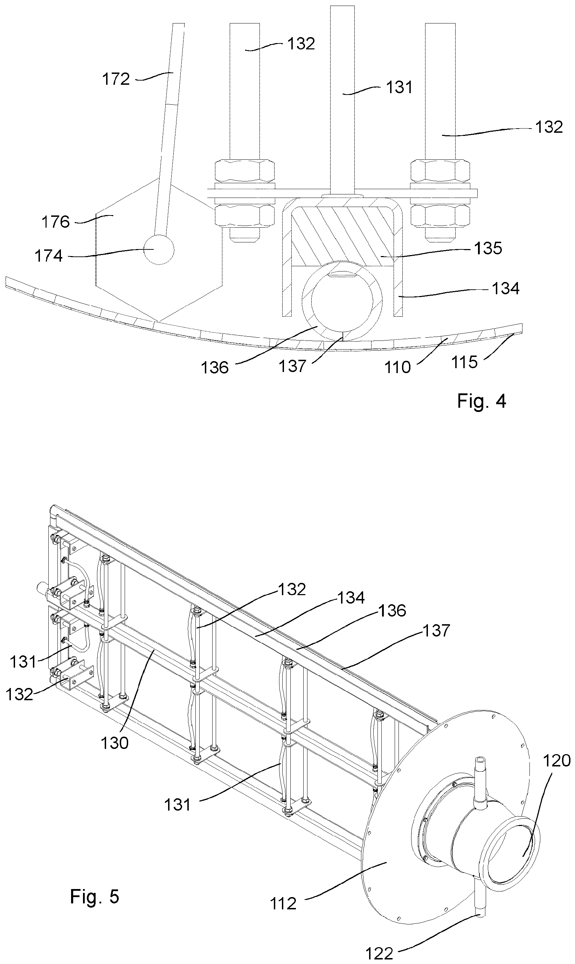

An example of a passive vibrating device is shown in detail in Figure 4 whereas its location and connections to other parts is shown for example in Figure 1. The vibrating device of an embodiment is a non-circular body 176 which is arranged to rotated about a shaft 174. The shaft 174 is connected to an end of an arm 172 and the opposite end of the arm 172 is connected to the main air pipe 130 or to a support structure thereof. The arm 172 is preferable connected with a hinge 170 to the main air pipe 130 or to the support structure thereof. The body of the vibrating device can be for example a hexagonal cylinder where the shaft 174 is parallel to the rotational axis of the tubular section 110 of the perforated support structure. The arm 172, which is preferably metal such as steel or spring steel, presses the vibrating device 176 against the perforated support structure from the inside. As the perforated support structure is rotated, the hexagonal vibrating device 176 rotates in step-wise manner creating impacts to the perforated support structure on each step-wise rotating motion. This creates a continuous vibration of the perforated support structure which can be further emphasized by using multiple vibrating devices. The screen cloth 115 is sucked against the perforated support structure 110, 111 as suction is applied on the outlet 120. Thereby the continuous vibration of the perforated support structure causes continuous vibration of the screen cloth 115. Declogging of the screen cloth is continuous and highly effective with a continuous vibration and continuous flow of cleaning air from the declogging nozzle 136, 137. The continuous and effective declogging enables a high throughput of the screening device 100.

Looking at Figure 4 now, the screening device can further comprise a nozzle support 134 having an elastic member 135 located between the nozzle support 134 and the declogging nozzle 136, 137. The elastic member 135 is compressible material which compresses when a force applied and returns to its original shape when the force is no longer applied. Preferably, the nozzle support substantially encases the declogging nozzle 136, 137 in a space delimited by said nozzle support 134, the elastic member and said perforated support structure 110, 111. The nozzle support 134 and the elastic member 135 allow movement of the declogging nozzle in radial direction of the tubular shape but substantially prevent movement of the declogging nozzle in circumferential direction of the tubular shape. This arrangement keeps the declogging nozzle in contact with the perforated support structure regardless of manufacturing tolerances and other minor deviations in dimensions. In an embodiment, the nozzle support 134 is a U-shaped profile having width larger that the diameter of the tube 136 of the declogging nozzle. In this embodiment, the slot 137 of the declogging nozzle faces exactly opposite direction to the bottom of the U-shape of the nozzle support. The elastic member can be arranged inside and at the bottom of the U-shaped nozzle support. The nozzle support 134 is made of metal, plastic or other substantially rigid material. Where one or more nozzle supports 134 are used, the declogging nozzle(s) can be fixed to the nozzle support(s) which are supported by rods 132 extending between the main air pipe 130 and the nozzle support(s). The one or more air tubes 131 are preferably flexible tubes, especially when using the nozzle support and the elastic member, to allow for a radial movement of the declogging nozzle.

The declogging nozzle performs the declogging locally and therefore the perforated support structure 110, 111 and the screen cloth 115 are rotatable in relation to the inlet 122, the air conduit 130, 131 and the declogging nozzle 136, 137. A first bearing member 141 is provided around the main air pipe 130, or an extension thereof, and a second bearing member 142 is provided around the tubular extension of the outlet 120. The bearing members can be provided in a form of low-friction sliding surfaces or ball bearings. When the screening device 100 is installed into a ball mill 200, the end plate 112 is attached to an end of the ball mill. Thus, the end plate 112 as well as the perforated support structure 110, 111 are rigidly attached to the ball mill. When the ball mill is rotated, the perforated support structure also rotates along with the ball mill. The outlet 120 and the inlet 122, as well as the air conduit 130, 131 and the declogging nozzle 136, 137, remain stationary due to the bearing members 141, 142. This rotating action allows for a continuous declogging of the screen cloth 115 of the screening device. This combined with the continuous vibration of the perforated support structure and the screen cloth enables for a highly effective declogging action.

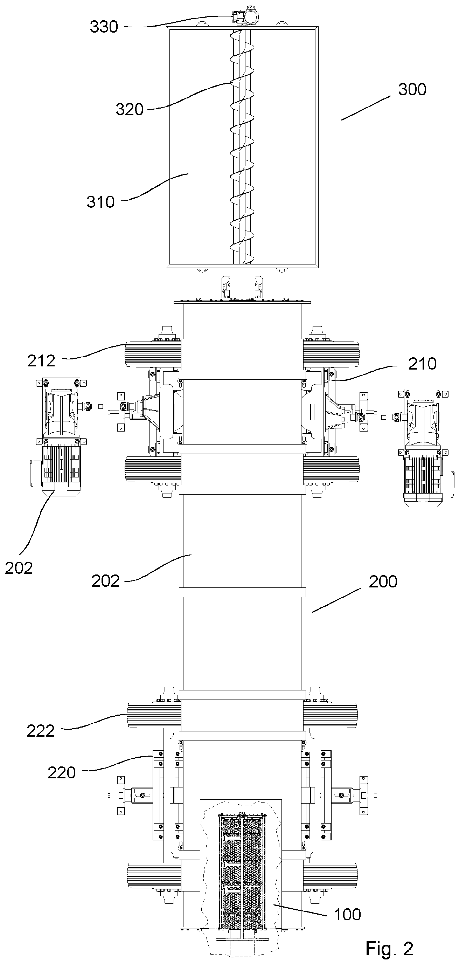

Figure 2 illustrates another aspect of the present disclosure which is a screening system. The screening system comprises a rotatable ball mill 200 for milling source material into smaller particles. The ball mill 200 comprises a cylindrical chamber 202 and at least one rotating device 210. Each rotating device comprising a motor 202 and one or more rollers 212 in contact with the outside of the chamber where the one or more rollers 212 are configured to be rotated by said motor 202. The ball mill may also comprise idle rollers which merely support the chamber but are not connected to a motor. Instead of rollers, also toothed gears can be used. In that case matching teeth are provided on the outer surface of the cylindrical chamber 202.

The system also comprises a feeding device 300 configured to feed source material into said ball mill 200. The feeding device can comprise an air blower and an air channel in fluid connection with both said air blower and the inside of the ball mill 200. The source material input is deposited from a container 310 to the air channel from which the air blower moves the source material into the ball mill with an air flow. The feeding device 300 can also be a screw feeder and comprise a container 310, a screw 320 at least partially inside the container 310 and a motor 330 for rotating the screw 320.

The system further comprises a screening device 100 of the present disclosure. The screening device 100 is at least partially inside said ball mill 200. The outlet 120 and the inlet 122 of the screening device are accessible from the outside of the ball mill 200.

Yet another aspect of the present disclosure is a method of screening dry source material. The method comprises steps of:
- feeding source material into a ball mill 200,
- continuously milling the source material into smaller particles inside the ball mill 200,

- continuously screening the source material with a screening device 100 located partially inside the ball mill 200 forming a screened fraction inside the screening device,
- continuously declogging a screen cloth 115 of the screening device with a flow of cleaning air,
- continuously vibrating the screen cloth 115 of the screening device, and
- continuously removing the screened fraction from the screening device by suction via an outlet 120 of the screening device.

The method characterized by that the screening device 100 is a screening device of the present disclosure. In an embodiment, the dry source material is recycled wool, or some other building material. By dry source material, we mean source material that is dry enough to be loose material and not forming lumps due to moisture. In an embodiment, the screened fraction comprises at least 90 weight-% of geopolymers. In an embodiment, the method is a method of producing geopolymers from recycled wool.

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. A screening device (100) comprising
a screen cloth (115) for separating a screened fraction from source material,
a perforated support structure (110, 111) for supporting the screen cloth (115),
an outlet (120) for the screened fraction,
an inlet (122) for cleaning air,
a declogging nozzle (136, 137), and
an air conduit (130, 131) extending between said inlet (122) and said declogging nozzle (136, 137) configured to direct a flow of cleaning air from the inlet (122) against the screen cloth (115), wherein
said perforated support structure (110, 111) and said screen cloth are rotatable in relation to said inlet (122), said air conduit (130, 131) and said declogging nozzle (136, 137),
wherein the screen cloth (115) is outside the perforated support structure (110, 111) and the declogging nozzle (136, 137) is inside the perforated support structure (110, 111),
wherein the screening device (100) is **characterized in that** the screening device further comprises a vibrating device (176) in physical contact with the perforated support structure (110, 111).

2. A screening device (100) according to claim 1, wherein the perforated support structure comprises a tubular section (110) and a planar section (111) where the planar section (111) closes one end of the tubular section (110).

3. A screening device (100) according to claim 2, wherein the screening device (100) comprises at least one declogging nozzle (136, 137) configured to direct a flow of cleaning air from the inlet (122) against the screen cloth through the tubular section (110) of the perforated support structure and at least one declogging nozzle configured to direct a flow of cleaning air from the inlet (122) against the screen cloth through the planar section (111) of the perforated support structure.

4. A screening device (100) according to any one of claims 1 to 3, wherein said declogging nozzle comprises a tube (136) having one or more apertures (137) facing the perforated support structure (110, 111).

5. A screening device (100) according to any one of claims 1 to 4, wherein said declogging nozzle comprises a tube (136) having a slot (137) extending substantially the whole length of the tube (136), where the slot (137) has a width of at least 0,1 mm and at most 1,0 mm.

6. A screening device (100) according to any one of claims 1 to 5, wherein the screening device further comprises a nozzle support (134) substantially encasing the declogging nozzle (136, 137) in a space delimited by said nozzle support (134) and said perforated support structure (110, 111), where the nozzle support (134) allows for movement of the declogging nozzle (136, 137) in radial direction and prevents substantial movement of the declogging nozzle in circumferential direction.

7. A screening device (100) according to claim 6, wherein the screening device further comprises a compressible, elastic member (135) between the nozzle support (134) and the declogging nozzle (136, 137) for pressing the declogging nozzle (136, 137) into a contact with the perforated support structure (110, 111).

8. A screening device (100) according to any one of claims 1 to 7, wherein the screen cloth (115) has a pore size of at least 30 micrometers and at most 1000 micrometers.

9. A screening device (100) according to any one of claims 1 to 8, wherein the vibrating device (176) is a passive vibrating device configured to cause vibrations in the perforated support structure (110, 111) and the screen cloth (115) when the perforated support structure is rotated.

10. A screening system comprising
a rotatable ball mill (200) for milling source material into smaller particles, and
a feeding device (300) configured to feed source material into said ball mill (200),
**characterized in that** the screening system further comprises
a screening device (100) according to any one of claims 1 to 9, wherein said screening device (100) is at least partially inside said ball mill (200).

11. A screening system according to claim 10, wherein the rotatable ball mill (200) comprises a cylindrical chamber (202), at least one rotating device (210), each rotating device comprising a motor (202) and one or more rollers (212) in contact with the outside of the chamber, said one or more rollers (212) being configured to be rotated by said motor (202).

12. A screening system according to claim 10 or 11, wherein the feeding device comprises an air blower and an air channel in fluid connection with both said air blower and the inside of the ball mill (200).

13. A method of screening dry source material, wherein the method comprises steps of:
feeding source material into a ball mill (200),
continuously milling the source material into smaller particles inside the ball mill (200),
continuously screening the source material with a screening device (100) located partially inside the ball mill (200) forming a screened fraction inside the screening device,
continuously declogging a screen cloth (115) of the screening device with a flow of cleaning air,
continuously vibrating the screen cloth (115) of the screening device, and
continuously removing the screened fraction from the screening device by suction via an outlet (120) of the screening device,
wherein the method is **characterized in that** the screening device is a screening device according to any one of claims 1 to 9.

14. A method according to claim 13, wherein the dry source material is recycled wool.

15. A method according to claim 13 or 14, wherein the screened fraction comprises at least 90 weight-% of geopolymers.
